(19) Europäisches Patentamt
European Patent Office
Office européen des brevets

(11) **EP 1 866 735 B1**

(12) **EUROPEAN PATENT SPECIFICATION**

(45) Date of publication and mention
of the grant of the patent:
**09.06.2010 Bulletin 2010/23**

(51) Int Cl.:
***G06F 3/033*** (2006.01)     ***G06K 9/22*** (2006.01)
***G06Q 30/00*** (2006.01)     ***G06K 7/10*** (2006.01)
***G06K 7/14*** (2006.01)

(21) Application number: **06717034.0**

(22) Date of filing: **21.03.2006**

(86) International application number:
**PCT/SE2006/000349**

(87) International publication number:
**WO 2006/101437 (28.09.2006 Gazette 2006/39)**

(54) **COMBINED DETECTION OF POSITION-CODING PATTERN AND BAR CODES**

KOMBINIERTE DETEKTION VON POSITIONSCODIERUNGSMUSTERN UND STRICHCODES

DETECTION COMBINEE D'UN SCHEMA DE CODAGE DE POSITION ET CODE A BARRES

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.03.2005 US 84090**

(43) Date of publication of application:
**19.12.2007 Bulletin 2007/51**

(73) Proprietor: **Anoto AB**
**227 22 Lund (SE)**

(72) Inventors:
• **ERICSON, Petter**
**S-221 49 Malmö (SE)**

• **LYNGGAARD, Stefan**
**S-224 79 Lund (SE)**

(74) Representative: **Grönlund, Tim Linus Wilhelm**
**Anoto AB**
**Box 4106**
**227 22 Lund (SE)**

(56) References cited:
**EP-A2- 1 014 254**     **WO-A-00/04487**
**JP-A- 58 014 278**     **US-A- 5 420 943**
**US-A- 5 945 656**     **US-A1- 2002 050 982**
**US-A1- 2002 050 982**     **US-B1- 6 593 908**

## Description

Field of the Invention

The invention relates generally to information processing and, more specifically, relates to data entry using optical sensor technology.

Background of the Invention

Forms and the like are used to a considerable extent in today's society. The aim of such forms is to ensure that a user fills in the correct information and that this is carried out in a structured way. Therefore, forms usually consist of a sheet of paper containing printed form layouts with instructions concerning what information is to be filled in and where.
With modern computer technology, it is possible to record the information that is entered on a form. For example, the filled-in form may be scanned with a flat-bed scanner connected to a computer system, to create an information file in a graphical format (e.g. TIFF format). The created file may then be processed by OCR technology to recognize text both in the layout of the form and in the fields which have been filled in by a user.
The present Applicant has developed a technology for electronic capture and transmission of handwriting, based on electronic pens that read position data from a position-coded product surface while being used for writing on the surface, see e.g. US 2003/0061188; US 2003/0046256 and US 2002/0081711. The electronic handwriting can be transferred from the pens to one or more dedicated processing devices for interpretation and data extraction, where data from different products are distinguished based on the position-content of the handwriting data.
This technique can be made transparent to the user, with automatic recording and/or transmittal of data. Further, data may be instantly made available to the processing device without any need for an intermediate scanning step. Also, data extraction may be improved due to an increased quality of available data, compared to scanned data, and access to dynamic handwriting parameters, such a time data and writing force.
However, a market barrier to this technology is created by the large investments already made in existing technology for identifying and processing handwriting on forms and the like. It would be desirable to lower this barrier as much as possible.
US 2002/0 050 982 discloses reading of position codes and bar codes with a pen device. The independent claims are delimited against this prior art.

Summary of the Invention

The invention concerns a method for operating a pen device according to claim 1 and a pen device according to claim 20.
The pen device with combined bar code and position detection capability may be generally applicable to support registering of a product with is labeled with a bar code and to link the bar code, and thereby the product or information related thereto, to handwritten information entered on a form. Thus, the pen device provides for an integration of existing bar code identification techniques and electronic pen technologies for handwriting capture.

Brief Description of the Drawings

Fig. 1A shows an overview of a system;
Fig. 1B shows a position-coding pattern which may be used in an exemplary embodiment of the present invention; and Fig. 1C shows a user unit, partly in section, in accordance with an exemplary embodiment of the present invention.
Fig. 2 shows a form.
Fig. 3 shows an identifying pattern.
Fig. 4 shows the application of a number of rules with position information as input data.
Fig. 5 is a flow chart describing a method for generating forms.
Fig. 6 is a flow chart describing a method for recording form data for an information entry.
Fig. 7 shows an information management system.
Fig. 8 is a flow chart describing a method for identifying and decoding a bar code in accordance with an exemplary embodiment of the present invention.
Fig. 9 illustrates an exemplary sub-step of the method in Fig. 8, wherein part of an image (left) is summed in one direction for creation of a one-dimensional luminance profile (right).
Fig. 10 illustrates an exemplary sub-step of the method in Fig. 8, wherein a one-dimensional luminance profile is differentiated and filtered.

Fig. 11 illustrates an exemplary step of the method in Fig. 8, wherein the mutual displacement between one-dimensional luminance profiles (left) is determined based upon the result of a correlation procedure (right).

Fig. 12 illustrates an exemplary sub-step of the method in Fig. 8, wherein a fractional displacement is determined based upon the result of a correlation procedure.

Fig. 13 illustrates the use of buffers for merging one-dimensional image profiles to a single bar code profile, in accordance with an exemplary embodiment.

Fig. 14 illustrates different stages during processing to eliminate fictitious edges in accordance with an exemplary embodiment.

Fig. 15 illustrates a state matrix used in maximum-likelihood calculations of mutual displacements between bar code profiles in a sequence of images.

Detailed Description of Embodiments

The following description presumes the provision of a form having a form layout with at least one entry field. It may be printed on a base in the form of a sheet (or any other surface). The surface of the base may have a position-coding pattern. The entry field can be completed using a user unit that has an optical sensor to detect positions on the sheet utilizing the position-coding pattern. The optical sensor can thereby enable digital recording of the information entered in the entry field. The surface may also have an identity pattern that can identify the form layout or the individual form specimen after detection by the sensor.

Thus, the user unit may be operated to record not only position data representative of its movement over the position-coding pattern on the form, but also data representative of the identity pattern on the form. This latter identity data can be used, in a computer system associated with the user unit, to link the recorded position data to a particular database form in the computer system. Specifically, the information entered in a particular entry field can be linked to, and stored in, a particular record in the database form. The structuring of the completed information may thus be carried out automatically.

The information which is stored in the information entry may comprise output data which is generated when the computer system applies a processing rule to the recorded position data. The processing rule may be specific to the particular entry field in which the position data was recorded. The format of the output data of the processing rule may be from the group comprising: Boolean variable, integer, real number, text string or a graphical format. These formats can then be processed in various general ways by the computer system.

The computer system may be contained in the user unit. This enables both mobile recording and interpretation of information which is entered on a form. Processed data can thereafter be forwarded to other systems. Alternatively, the computer system may be contained in an external apparatus that receives recorded data from the user unit, for example a server, a personal computer, PDA (Personal Digital Assistant), a mobile phone, etc.

The above recording of data entered on a form does not require a flat-bed scanner equipped with advanced software for image analysis. The completion of the form and recording of the information entered may be carried out in a single stage. The form may not need to be sent away, but can, for example, be retained as a copy of what was entered on it. Mobile recording can be carried out in the field. The computer system may be configured to process the entered information in a simple and structured way, reducing the danger of errors.

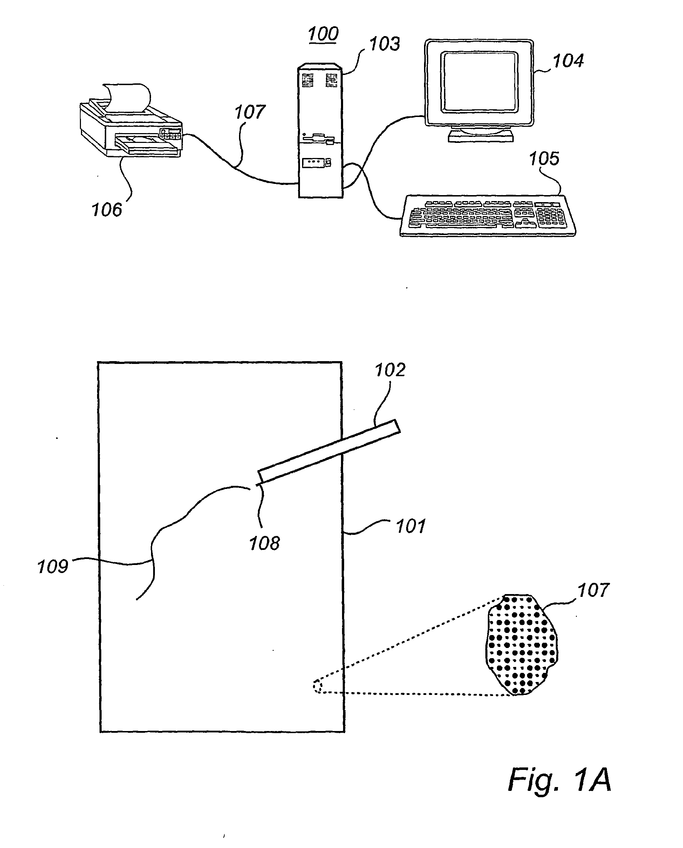

Fig. 1A shows a computer system 100 capable of generating and processing forms. Fig. 1A also depicts a base 101 in the form of a sheet and a user unit 102 having an optical sensor.

The computer system 100 may include personal computer 103 to which is connected a display 104 and a keyboard 105. However, forms may be generated and processed by both larger and smaller computer systems than those shown in Fig. 1A. The computer system 100 may include a printer 106, which may be a laser printer, an ink-jet printer, or any other type of printer.

The base 101 can be a sheet of paper, but other materials such as a plastic, laminate, or other paper stock such as cardboard may provide a suitable surface on which to create a form. In such a form, the base 101 is provided with a position-coding pattern 107 (shown enlarged). The printer 106 may create the position-coding pattern 107 on demand, or the base 101 may come with the position-coding pattern already applied thereto.

The position-coding pattern 107 may be arranged so that if a part of the pattern of a certain minimum size is recorded optically, then this part of the pattern's position in the pattern and hence on the base can be determined unambiguously. The position-coding pattern can be of any one of various known configurations. For example, position-coding patterns are known from the Applicant's patent publications US 6,570,104, US 6,663,008, US 6, 667, 695, US 6,674,427, and WO 01/16691.

In the position-coding patterns described in those applications, each position may be coded by a plurality of symbols and one symbol may be used to code a plurality of positions. The position-coding pattern 107 shown in Fig. 1A is constructed in accordance with US 6,570,104. A larger dot may represent a "one" and a smaller dot may represent a "zero".

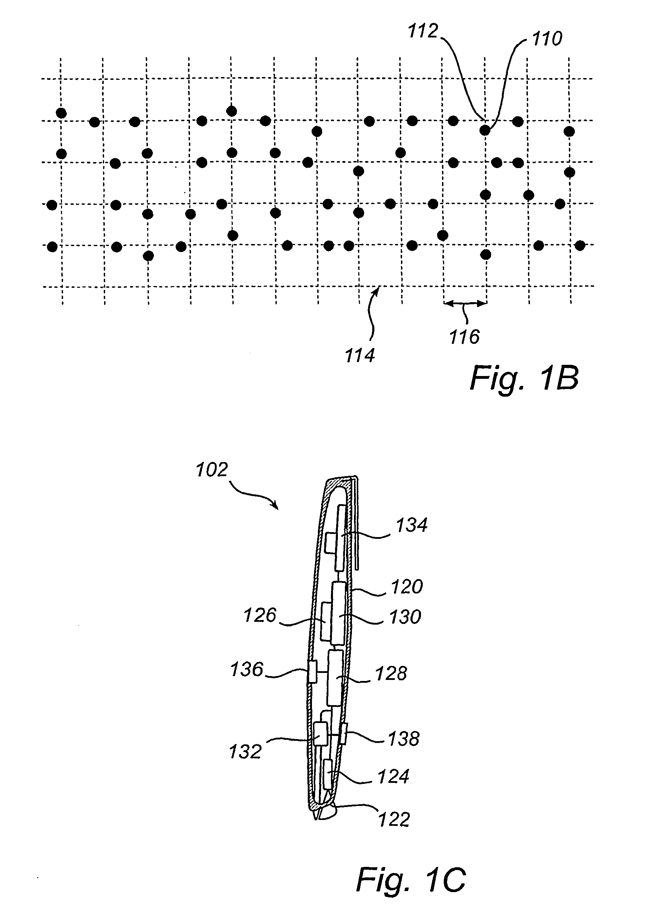

The position-coding pattern may be of any other suitable design, for example as illustrated in Fig. 1B and further described in aforesaid US 6,663,008. Principally, the coding pattern of Fig. 1B is made up of simple graphical symbols, which can assume four different values and thus are capable of coding two bits of information. Each symbol consists of a mark 110 and a spatial reference point or nominal position 112, the center of the mark 110 being displaced or offset a distance in one of four different directions from the nominal position 112. The value of each symbol is given by the direction of displacement. The symbols are arranged with the nominal positions forming a regular raster or grid 114 with a given grid spacing 116. The grid may be virtual, i.e. invisible to any decoding device, and thus not explicitly included in the coding pattern. Each absolute position is coded in two dimensions by the collective values of a group of symbols within a coding window, e.g. containing 6 x 6 adjacent symbols. Further, the coding is "floating", in the sense that an adjacent position is coded by a coding window displaced by one grid spacing. In other words, each symbol contributes in the coding of several positions.

Other types of position-coding patterns are known, for example, from patent publications US 6,330,976, US 2004/0085287, and US 5,852,434.

Returning now to Fig. 1A, a user unit 102 is illustrated, by way of example only, as being designed as a pen. The user unit 102 may have a pen point 108 that can be used to write text and numbers or draw figures on the base. The user unit 102 may also comprise an optical sensor that utilizes the position-coding pattern 107 on the base 101 to detect positions on the position-coding pattern. When a figure 109 is drawn on the base 101, the optical sensor may detect a sequence of positions on the base 101 that correspond to the movement of the user unit 102 over the base 101. This sequence of positions forms a digital record of the figure 109 drawn on the base 101. In the same way, hand-written numbers and letters can also be recorded digitally.

As indicated by the trace 109, the pen point 108 may deposit ink in the base 101. This writing ink is suitably of such a type that it is transparent to the optical sensor, to avoid the writing ink interfering with the detection of the pattern. Similarly, the form layout may be printed on the base in a printing ink which is invisible to the sensor, although this may not be necessary. On the other hand, the position-coding pattern is printed on the base in a printing ink which is visible to the sensor. In one embodiment, the optical sensor is designed to sense the position-coding pattern by detecting radiation in the infrared wavelength region. The identity pattern may or may not, depending on implementation, be printed on the base in a printing ink which is visible to the sensor.

An exemplary embodiment of the user unit is further illustrated in Fig. 1C. Here, the user unit comprises a pen-shaped casing or shell 120 that defines a window or opening 122, through which images are recorded. The casing contains a camera system, an electronics system and a power supply. The camera system 124 may comprise at least one illuminating light source, a lens arrangement and an optical sensor. The light source, suitably a light-emitting diode (LED) or laser diode, may illuminate a part of the area that can be viewed through the window 122, e.g. by means of infrared radiation. An image of the viewed area may be projected on the image sensor by means of the lens arrangement. The optical sensor may be a two-dimensional CCD or CMOS detector which is triggered to capture images at a fixed or variable frame rate, for example of about 70-100 Hz.

The power supply for the pen may be a battery 126, which alternatively can be replaced by or supplemented by mains power (not shown).

The electronics system may comprise a control device 128 which is connected to a memory block 130. The control device 128 may be responsible for the different functions in the user unit and may be implemented by a commercially available microprocessor such as a CPU ("Central Processing Unit"), by a DSP ("Digital Signal Processor") or by some other programmable logical device, such as an FPGA ("Field Programmable Gate Array") or alternatively an ASIC ("Application-Specific Integrated Circuit"), discrete analog and digital components, or some combination of the above. The memory block 130 may comprise different types of memory, such as a working memory (e.g. a RAM) and a program code and persistent storage memory (a nonvolatile memory, e.g. flash memory). Associated user unit software may be stored in the memory block 130 for execution by the control device 128 in order to provide a control system for the operation of the user unit.

A contact sensor 132 may be operatively connected to the pen point to detect when the user unit is applied to (pen down) and/or lifted from (pen up) a base, and optionally to allow for determination of the application force. Based on the output of the contact sensor 132, the camera system 124 is controlled to capture images between a pen down and a pen up. The control unit processes the images to calculate positions encoded by the imaged parts of the position-coding pattern. Such processing can, e.g. be implemented according to Applicant's prior publications: US 2003/0053699, US 2003/0189664, US 2003/0118233, US 2002/0044138, US 6,667,695, US 6,732,927, US 2003/0122855, US 2003/0128194, and references therein. The resulting sequence of temporally coherent positions forms an electronic representation of a pen stroke.

The electronics system may further comprise a communications interface 134 for transmitting or exposing information recorded by the user unit to a nearby or remote apparatus, such as a personal computer, a cellular mobile telephone, PDA, network server etc, for further processing, storage, or transmission. The communications interface 134 may thus provide components for wired or wireless short-range communication (e.g. USB, RS232, radio transmission, infrared transmission, ultrasound transmission, inductive coupling, etc), and/or components for wired or wireless remote communication, typically via a computer, telephone or satellite communications network. The position information that is transmitted can be representative of the sequence of positions recorded by the user unit in the form of a set of pairs of coordinates, a polygon train, or in any other form. The position information may also be stored locally in the user unit and transmitted later, when a connection is established.

The pen may also include an MMI (Man Machine Interface) 136 which is selectively activated for user feedback. The MMI may include a display, an indicator lamp, a vibrator, a speaker, etc. Still further, the pen may include one or more buttons and/or a microphone 138 by means of which it can be activated and/or controlled.

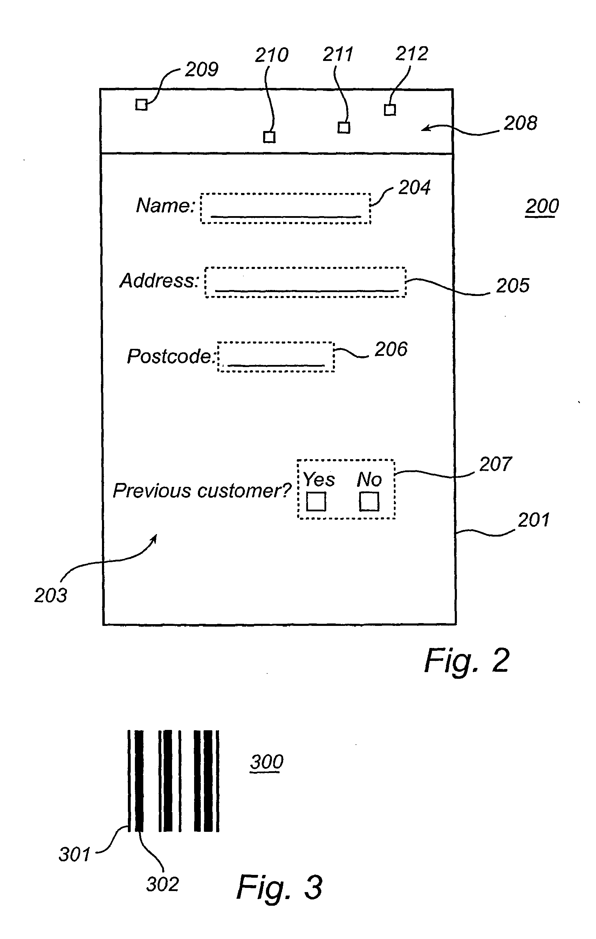

Fig. 2 shows a form 200. The form 200 consists of a base 201 (or any other surface) provided with a position-coding pattern (not shown in Fig. 2). A form layout 203 is also printed on the base 201. The form layout 203 comprises a plurality of entry fields 204-207. While the surface disclosed in the figures comprises a single discrete surface such as a sheet of paper, the term surface as used herein may refer to multiple surfaces or multiple pages of a multi-page form.

The form 200 may enable collection of information. For example, the user may write text or a number in any of the entry fields 204-207. Information provided by a user may be text (e.g., a name or an address). It may also be a whole number, such as the age of a person in whole years, or a real number, such as a patient's body temperature in degrees Celsius to two decimal places. It can also be the reply to a multi-choice question. A form may enable the entry of other types of information.

The user may download the form layout from an Internet server. The form layout may also be stored in other computer systems, such as the user unit 102.

While an entry field 204-207 is completed by a user using a user unit 102, the user unit may record a sequence of positions corresponding to a digital record of the entered information. The recorded information can then be processed or stored locally in the user unit. Alternatively, it can be transmitted to another computer system for processing or storage. Such processing may require knowledge of the form layout.

The form 200 may also comprise an identifying pattern or identity pattern 208. As will be further described below, the identity pattern may be used to identify the form layout or the individual form specimen. The identity pattern may be marked, for example, by drawing a cross through one or more boxes defined by the identity pattern or circling one or more locations defined by the identity pattern. The user may instead be invited to fill in one or more missing features in a figure.

In Fig. 2, the identity pattern consists of four boxes 209-212. When these are marked with a cross using the user unit, a set of positions may be recorded by the optical sensor. By finding a matching set of positions in a database of position patterns representing possible form layouts, a computer processing the position data can determine the form layout 203 corresponding to the positions marked. The entry fields 204-207 and the four boxes 209-212 may be completed in any order. In one embodiment, the absolute positions in the position-coding pattern that are recorded when the boxes are marked are utilized to identify the form layout. In another embodiment, the relative positions of the different boxes in the position-coding pattern are used to identify the form layout.

A user who wants to generate a number of forms may acquire a pack of sheets which are already provided with a position-coding pattern and load a number of such sheets into his/her printer. All the sheets in such a pack can be identical, i.e. the position-coding pattern on all sheets may code the same set of positions. It is also possible for each sheet in a pack to be unique, so that the sets of positions coded by the position-coding pattern on the different sheets are mutually exclusive. The user can also print the position-coding pattern himself using a printer having sufficiently high printing resolution.

The position-coding patterns described in Applicant's patent publications US 6,570,104, US 6,663,008, US 6,667,695, US 6,674,427, and WO 01/16691 are capable of defining a very large total area of positions (multiple A4-sized pages) with good resolution. The total area can be subdivided into mutually unique subareas suitable for use on form sheets. Each subarea is thus implemented on a tangible sheet as a corresponding subset of the overall position-coding pattern. The positions that are encoded on a pack of sheets that a user can acquire may be known to the system responsible for processing information entered on the form. When all the sheets in a pack are identical, the system knows where on a sheet a position in the position-coding pattern is located. If sheets are unique within the pack, the system also knows on which sheet a position in the position-coding pattern is located. This makes possible parallel recording of a plurality of forms.

Parallel recording can also be achieved for identical sheets, i.e. sheets that all encode the same set of positions, by also recording the identities of the user units so that the system can connect the information from different user units with different database forms. Alternatively, data from identical sheets can be differentiated if the user, in connection with filling-in the form, operates the user unit to mark a personal identifying pattern. The personal identifying pattern may be unique to the respective user, and may for example be implemented as a pattern encoding a dedicated set of positions, or a bar code encoding a dedicated identifier.

Parallel recording can also be achieved for identical sheets by each such sheet being provided with an identity pattern which not only identifies the form layout but also the printed form. Thus each printed specimen of the form (form instance) may be given a unique identifier with is provided on the form as an identity pattern.

This principle may also be used in the embodiment of the identity pattern 300 shown in Fig. 3. Here the pattern 300 consists of a set of parallel lines or bars 301, 302, etc., of different widths arranged beside each other, as a conventional bar code. If the bar code is printed on a position-coding pattern and marked by having a line drawn through it essentially at right angles to the lines 301, 302, etc. using the user unit with an optical sensor, the position recording may be commenced and terminated several times as a result of interference of the bar code lines with the detection of the position-coding pattern by the optical sensor. Thus, the relative locations and widths of the bar code lines may be inferred from the absolute positions that are recorded by the user unit. Knowing the spacing and width of the vertical lines, the bar code can be decoded and used to identify the form layout. In one embodiment, the user unit may be caused to detect the bar code based upon the recorded absolute positions, i.e. user unit expects a bar code at a given location in the position-coding pattern.

The skilled person will realize that the translation from absolute positions to line spacing and line width may need to take into account any misfit between the loss of position data and the actual edges of the bar code lines, e.g. caused by the fact each position-coding symbol or group symbols has a certain spatial extent and/or by the effects of error correction schemes embedded in the position-coding pattern.

In an alternative embodiment, the bar code is identified and decoded in the user unit based upon its physical features in the recorded images. The image(s) may be recorded by the camera system (124 in Fig. 1C) used for detection of the position-coding pattern, or by an auxiliary camera system in the user unit. The image(s) may be recorded while the user unit is held stationary over the bar code or, in particular if the bar code is larger than the field of view of the camera system, while the user unit is swept over the bar code.

In yet another embodiment, the identity pattern comprises an identifier which is written, visibly to the user unit, in plain language on the form. Thus, the user unit may be brought to record images of this identifier and to operate optical character recognition (OCR) algorithms thereon, to derive the identifier. Such algorithms are well-known in the art. Instead of bringing the user unit to scan in the identifier, the form may prompt the user to write down, with the user unit, the identifier in one or more dedicated position-coded input fields, or to represent the identifier by marking, with the user unit, a combination of available position-coded selection fields. Each such selection field may represent a symbol, such as a character, a number, a color, etc.

A form may be put to numerous uses, including market surveys, tests, medical records, and income-tax returns. This list is not intended to be exhaustive, and the invention is contemplated for use in connection with any form in which handwritten information is to be recorded and/or conveyed.

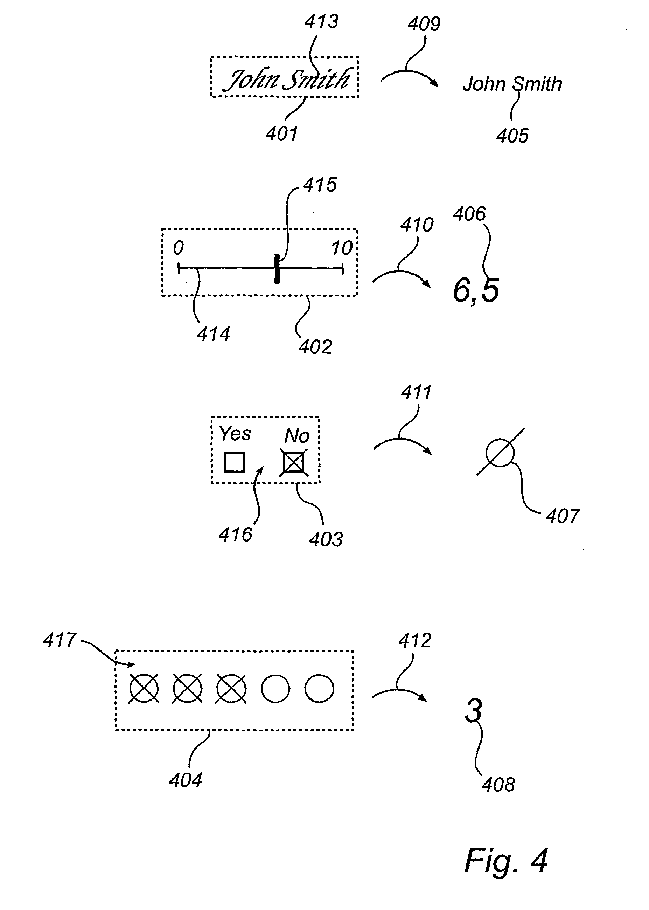

Fig. 4 shows the application of a number of processing rules or functions with position information as input data. On the left side of Fig. 4 is shown a number of entry fields 401-404, which may be completed by a user. On the right side of the figure is shown the information 405-408 which may be inserted in the corresponding information entries in a database when field-specific rules 409-412 of various kinds are applied to transform the items of position information (information entries) generated when the form is completed. Output data from such rules are generally obtained by processing the rule's input data.

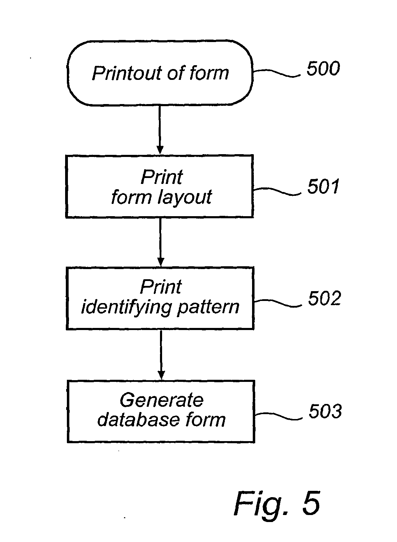

Fig. 5 is a flow chart that describes a method 500 for generating forms. A computer program may direct a printer to perform this method. In step 501, the form layout is printed. The actual form layout may be supplemented by graphics and text that are not necessarily strictly related to the form functionality. In step 502, an identity pattern may be printed. This identity pattern may identify the form layout, and optionally the form instance. In step 503, a database form is created in an associated computer system. The database form may be a virtual copy of the real form now created. For example, the database form may comprise records for data related to the real form and data related to information to be recorded by the user unit. The layout, the identity pattern, and the position-coding pattern may all be printed simultaneously, but they could also be printed sequentially in any order.

The position-coding pattern may be arranged on the paper in advance, perhaps by offset printing at high resolution (typically above 1000 dpi). The form layout may then be printed on top of the position-coding pattern. Also, the printer may be provided with a position-coding pattern reader device in order to facilitate the printing of a form layout that is adapted to the position-coding pattern.

Alternatively, the position-coding pattern may be applied to the paper by a separate printer after printing the form layout, or with the same printer in a second run. It is also possible to use a copying machine for providing the paper with the form layout and/or the position-coding pattern.

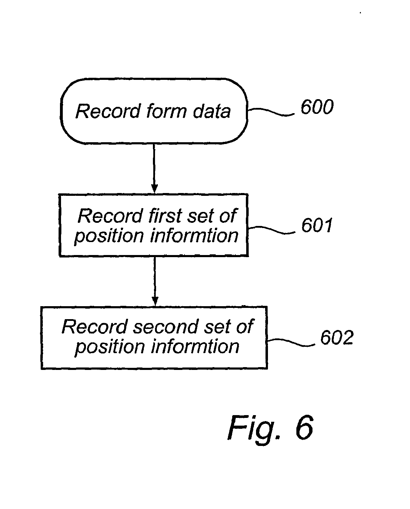

Fig. 6 is a flow chart that describes a method 600 for recording and processing form data for handwritten information entry. A computer program may perform these steps. In step 601, a first set of position information, entered into an entry field, may be recorded. In step 602, a second set of position information, arising from marking of an identity pattern with the user unit, may be recorded.

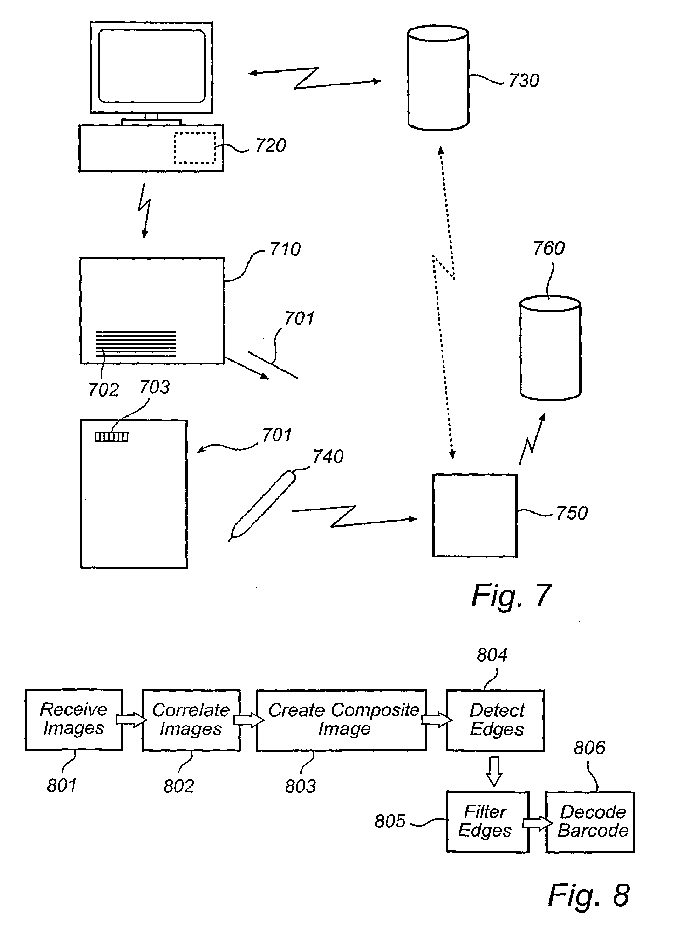

Fig. 7 illustrates an information management system. In the system, encoded forms 701 are generated from pre-encoded sheets 702, i.e. sheets which are provided with a position-coding pattern but with no form layout. Such sheets 702 can be manufactured at low cost in high volumes, e.g. by conventional offset printing, and be made available to different system providers or service providers. For reasons of logistics and stock-keeping, the number of sheets encoding different sets of positions may be limited. Therefore, to differentiate different form layouts or form instances which are generated from identical pre-encoded sheets, a bar code 703 is applied to the pre-encoded sheets 702.

To this end, the system of Fig. 7 comprises a printer 710 for applying a form layout and an identifying bar code 703 to a pre-encoded sheet 702, so as to output (illustrated by arrow) an encoded form 701. The printer may be controlled to print the bar code 703 on top of a position-coded part of the sheet 702. If the bar code 703 is printed to obscure the position-coding pattern, the bar code could be identified based upon the decoded positions. If the bar code 703 is visible to user units in the system, the bar code could be identified based on its features in the recorded images. Alternatively, the printer 710 may be controlled to print the bar code 703 in a non-encoded part of the sheet 702, and the bar code be identified based upon its physical appearance in the images. In yet another alternative, the system may include a label printer (not shown) which may be controlled to print the bar code 703 on an adhesive label to be attached to the pre-encoded sheet 702, either before or after the printing of the form layout on the sheet by means of the printer 710. Depending on method for identifying the bar code 703, the label material may be invisible to the user units or not.

The system also comprises a control module 720 which controls the generation of a form, based upon a form layout, and operates in relation to a first database 730. The control module 720 may be implemented by software executed on a computer. The system further comprises a user unit 740 which digitizes its handwriting motion on the form into sequence(s) of absolute positions, given by the position-coding pattern on the form. The user unit 740 is also capable of recording data indicative of the bar code 703 on the form. The system further comprises a forms data processor 750, which receives input data from the user unit 740, and processes this input data to generate output data for storage in a second database 760. It should be realized that the first and second databases 730, 760 may be part of one and the same overall database. The input data may be in any format, e.g. raw images recorded by the optical sensor of the user unit, positions decoded by the control device of the user unit, the identifier encoded by the bar code, data derived by recognition processing of handwriting, wholly or partly based on knowledge of the form layout, etc. The forms data processor 750 may be implemented by software executed on a computer.

In a first variant, the bar code 703 represents an identifier of the form layout ("form identifier"). In this case, the control module 720 may allow a user, via a suitable graphical user interface (GUI), to select a form layout from the first database 730. The control module 720 may derive the form layout and its form identifier from the first database 730. The control module 720 may also be operated to connect to further databases to derive data unique to each printout or a set of printouts, e.g. a name and other particulars to be printed together with the form layout. Then, the control module 720 transfers printing instructions to the printer 710 for printing of the form layout, the bar code and any data unique to each printout. The control module 720 may also derive information on the positions encoded on the pre-encoded sheets 702 in the printer 710, either by prompting the user to input this information, or by receiving this information from a position sensor in the printer 710. This position information may then be stored in the first database 730 in association with the form layout/form identifier.

Upon receipt of input data from the user unit 740, the forms data processor 750 extracts the bar-coded form identifier, and derives, based upon the form identifier, a set of processing rules for the corresponding form layout. As discussed above, these processing rules may be dedicated to operate on data from certain entry fields on the form, the data being identified from the positions which are known to be encoded within the respective entry field. The forms data processor 750 may need to consult the first database 730 to derive data on the positions encoded on the form, and thus the positions within each entry field on the form. The forms data processor 750 also derives the handwriting data from the input data and operates the respective processing rules thereon. In an alternative, the forms data processor 750 derives the form layout from the first database 730 based upon the form identifier and then displays the handwriting data superimposed on the form layout, to enable manual interpretation by a user who then generates at least part of the output data. In either case, the resulting output data is stored in a corresponding database form in the second database 760. The database form may comprise records which correspond to the different entry fields in the form layout. If available, the forms data processor 750 may also derive the above-mentioned user unit identifier or the above-mentioned personal identifier as given by a personal identifying pattern recorded by the optical sensor in the user unit, for storage in association with the corresponding output data in the database form.

In a second variant, the bar code 703 represents an identifier of a specific form printout ("form instance identifier"). This form instance identifier may be indicative of both the form layout and of a particular form instance in the system. Again, the control module 720 may allow a user, via a suitable graphical user interface (GUI), to select and derive a form layout from the first database 730. The control module 720 then generates a unique form instance identifier for each printout to be made. This form instance identifier may include a first part which is indicative of the form layout and second part which is indicative of the printout. The control module 720 may also be operated to connect to further databases to derive data unique to each printout or a set of printouts, e.g. a name and other particulars to be printed together with the form layout and/or to be stored in association with the form instance identifier in the first database 730. Alternatively, a link to such other particulars may be stored in the database 730. Similar to the first variant, the control module 720 may also derive information on the positions encoded on the pre-encoded sheets 702 in the printer 710, and store this position information in the first database 730 in association with the form layout/form identifier or the form instance identifier. The printing of the form is executed as in the first variant.

Upon receipt of input data from the user unit 740, the forms data processor 750 extracts the bar-coded form instance identifier, and derives, based upon the form instance identifier, a set of processing rules for the corresponding form layout. As in the first variant, the forms data processor 750 may need to consult the first database 730 to derive data on the positions encoded on the form, and thus the positions within each entry field on the form. As in the first variant, the forms data processor 750 derives the handwriting data from the input data and operates the respective processing rules thereon to generate output data which is associated with the form instance identifier. For each form instance identifier, a new database form may be generated in the second database 760. If a database form already exists for a particular form instance identifier, the output data may be added to the existing database form. As in the first variant, the database form may comprise records which correspond to the different entry fields in the form layout. If available, the forms data processor may also derive the above-mentioned user unit identifier or the above-mentioned personal identifier as given by a personal identifying pattern recorded by the optical sensor in the user unit, for storage in association with the corresponding output data in the database form.

In the second variant, it should be noted that the form instance identifier need not be indicative of the form layout. Instead, the form layout may be given by the positions encoded on the printed form. Thus, the control module 720 may generate a unique form instance identifier for each printout to be made of a particular form layout, and initiate the printer to generate printouts with correspondingly unique bar codes. The same set of positions may be encoded on all instances of the form layout. The association between form layout/form identifier and encoded positions may be created and/or recorded by the control module 720 and stored in the first database 730. For example, the control module 720 may initiate the printer 710 to apply both position-coding pattern, form layout and bar codes to blank sheets, or to apply form layout and bar codes to pre-encoded sheets, or to apply bar codes to pre-encoded forms, i.e. sheets which are provided with both position-coding pattern and form layout. In either case, the control module 720 may also derive data unique to each printout or a set of printouts, e.g. a name and other particulars for printing and/or storage in association with the form instance identifier in the first database 730. Upon receipt of input data from the user unit 740, the forms data processor 750 may derive, based upon one or more positions included in the input data, a set of processing rules for the corresponding form layout. The forms data processor 750 may then operate the respective processing rules on the handwriting data to generate output data. The forms data processor 750 may also extract the bar-coded form instance identifier from the input data and store the output data in the second database 760 in association with the form instance identifier.

It should also be clear to the skilled person that the above first and second variants may be combined to provide a system that allows generation of certain forms with bar codes representing form identifiers, and other forms with bar codes representing form instance identifiers.

It should be noted that there are other potential uses for bar code reading capability in a user unit for reading off a position-coding pattern. Such a user unit may support registering of a product, via a product-identifying bar code on the product, and a possibility to link the bar code, and thereby the product or information related thereto, to a position-coded form. Almost endless application examples are conceivable, all capitalizing on the notorious availability of bar codes for identification of products, persons, tasks, instructions etc. In one such application example, the user unit is operated to fill in a form for stock-taking, in which the number of items in stock of specific products may be noted in dedicated position-coded fields, while the identity of the respective product is inputted by the user unit reading off a bar code from a separate bar code list or from an actual product in stock, so that bar code data can be associated with a respective position-coded field. In another implementation example, the user unit reads off a bar code that identifies a specific patient which is to be associated with position data recorded on a position-coded medical chart. In yet another application example, one of more bar codes are read off from a medical drug inventory catalogue to identify a particular drug to be associated with a position-coded prescription form.

In the following, an approach for identifying and decoding a bar code based upon its physical features in the recorded images will be described with reference to Figs 8-15. This approach is based on three main steps: 1) acquire image(s) of the bar code; 2) identify all edges defined by the bars of the bar code; and 3) decode the bar code using the thus-identified edges.

There are several conceivable algorithms to be used in basic step 2. In one such algorithm, full resolution images, or at least image strips extending essentially across the bar code, are processed to locally detect edges in each image. These edges are then classified by their location in the image and by a probability value. The probability value may represent the image intensity at the edge. The edges may then be stitched together using error correction and dynamic programming, e.g. Viterbi algorithms, to get a complete sequence of edges representing the full bar code.

Likewise, there are several conceivable algorithms to be used in basic step 3. In one such algorithm, the white and black sections are separated based upon the sequence of edges given by step 2, whereupon a Fourier transform is operated thereon to determine the module size of the bar code. The module (also called "basic element") denotes the smallest width of bars or spaces in a bar code. This approach to step 3 has proved to be essentially unaffected by any gain in the module size due to printing artifacts and sensor exposure effects. Then, the size of each of the bars is classified to a certain number of modules. After such module classification, decoding is straightforward, as readily understood by the skilled person.

Although being quite operable, these algorithms for basic steps 2 and 3 can be further improved with respect to stability and robustness, as will be described in the following. The algorithms for identifying and decoding of bar codes as described herein may be executed by the control device in the user unit. Alternatively, all or parts of these algorithms may be executed by a corresponding control device in an external apparatus which receives recorded data from the user unit.

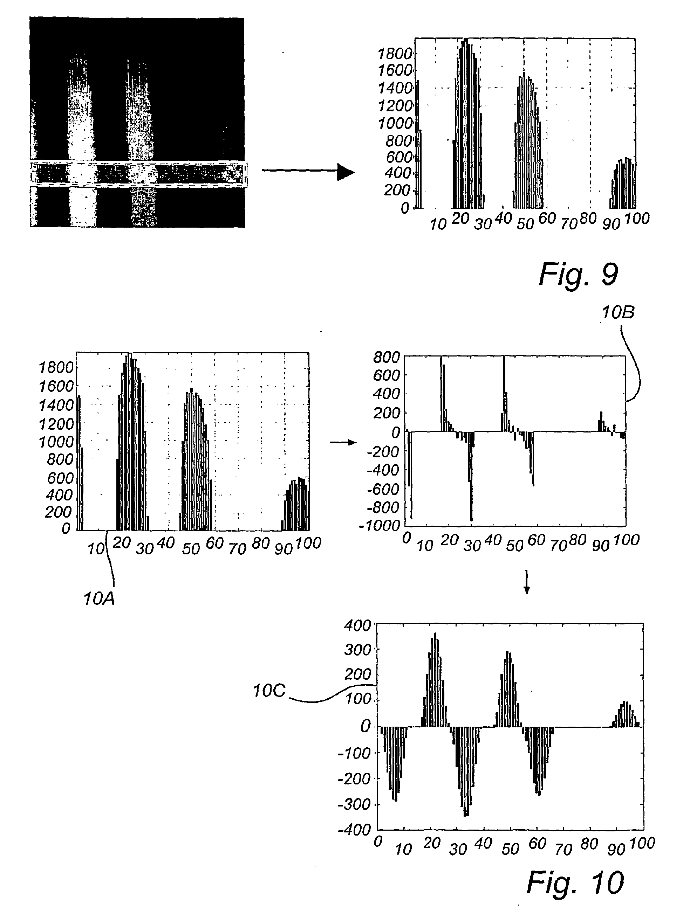

Fig. 8 is a schematic view of an image processing procedure implemented by the control device according to an exemplary embodiment of the invention. A first part of the image processing procedure (step 801) comprises receiving images, typically grayscale images, recorded by an optical sensor in the user unit. In order to reduce the demands on processing power and memory, as well as to reduce the impact of noise, a rectangular subset of the image ("image strip"), extending across the bars in the image, may be used in the further processing instead of the full image. This image strip, which is indicated as an opaque band in the left-hand image of Fig. 9, is made up of a two-dimensional matrix of image pixels, each holding a luminance value. The image strip may then be "binned" in its transverse direction, by summing or averaging the luminance values at each longitudinal pixel position in the image strip, to create a one dimensional (1D) image profile, as shown to the right in Fig. 9.

In a subsequent step 802, 1D image profiles are pair-wise correlated to detect the incremental displacement between two images. Before the actual correlation step, a number of sub-steps may be effected. A first sub-step may be to differentiate ($d(n)=x(n+1)-x(n)$) each original profile (10A in Fig. 10) resulting from step 801, resulting in a differentiated profile (10B in Fig. 10). Then, the differentiated profile may be low-pass filtered, for example with an 8-order FIR filter kernel, for example given by [0.047, 0.101, 0.151, 0.187, 0.200, 0.187, 0.151, 0.101, 0.047], to reduce any high-frequency elements. In one embodiment, the resulting low-pass filtered profiles (10C in Fig. 10) are used for correlation, whereas the original 1D image profiles are used for composing the complete bar code profile, as will be described below. Using low-pass filtered profiles in the correlation may be important, not only to reduce the influence of noise, but also to increase the robustness of the correlation process. Variations in the spatial orientation of the user unit while it is swiped across the bar code may lead to a change in spacing of a given set of edges from one image to the next, e.g. due to variations in perspective. If this change in spacing exceeds the width of the edges in the differentiated profile (see peaks in 10B in Fig. 10), the correlation process may result in an insignificant correlation value, possibly resulting in a failure to identify the bar code. Since the low-pass filtering results in a broadening of the edges in the differentiated profile (see peaks in 10C in Fig. 10), the tolerance of the correlation process to changes in edge spacing between images is enhanced correspondingly.

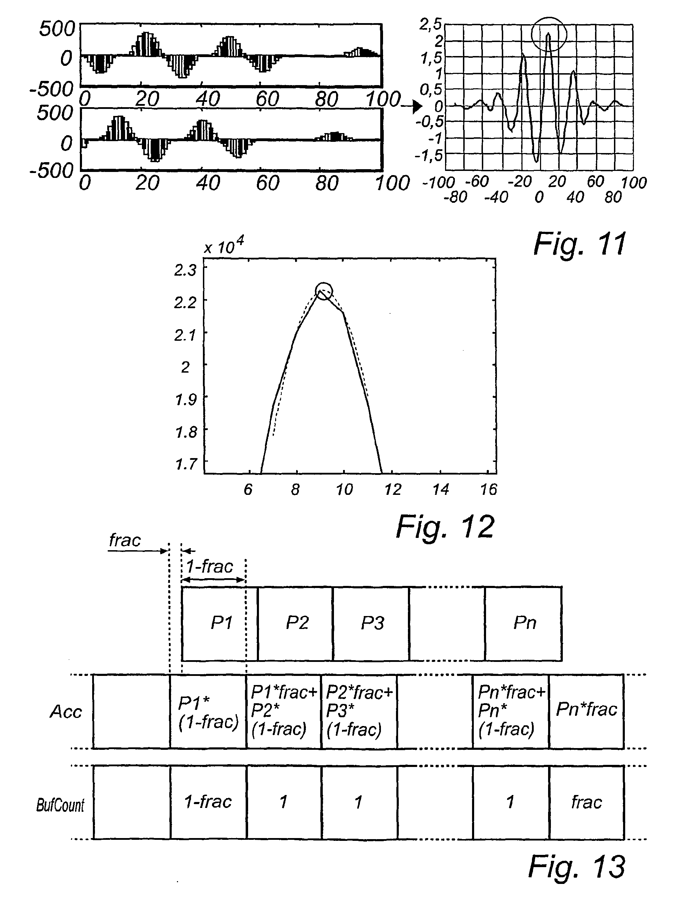

In the actual correlation step, two consecutive differentiated, low-pass filtered profiles are correlated, as shown to the left in Fig. 11. The result of the correlation, as shown to the right in Fig. 11, may be normalized with respect to correlation overlap, and operated with (multiplied by) a window weighting function to suppress results that are considered unlikely. Many possible window weighting functions are known to the skilled person, e.g. Hamming, Hanning, Triangle, Black-man, etc. For the first correlation, the window may initially be set to expect correlation results centered around zero, i.e. not to favor scanning right-to-left to scanning left-to-right. In subsequent pair-wise correlations, the last known correlation shift may be set as center of the window weighting function. This would give the system certain inertia, where extremely high changes in speed (corresponding to unnatural acceleration) between images are suppressed. The peak in the result of the correlation may be fit to a second-order polynomial to extract sub-pixel accuracy in the displacement. Fig. 12 shows such a fit, with a circle indicating the peak of the sub-pixel displacement. This sub-pixel or fractional part may be calculated as:

$$frac = \frac{y_{i-1} - y_{i+1}}{2(y_{i-1} + y_{i+1} - 2y_i)}$$

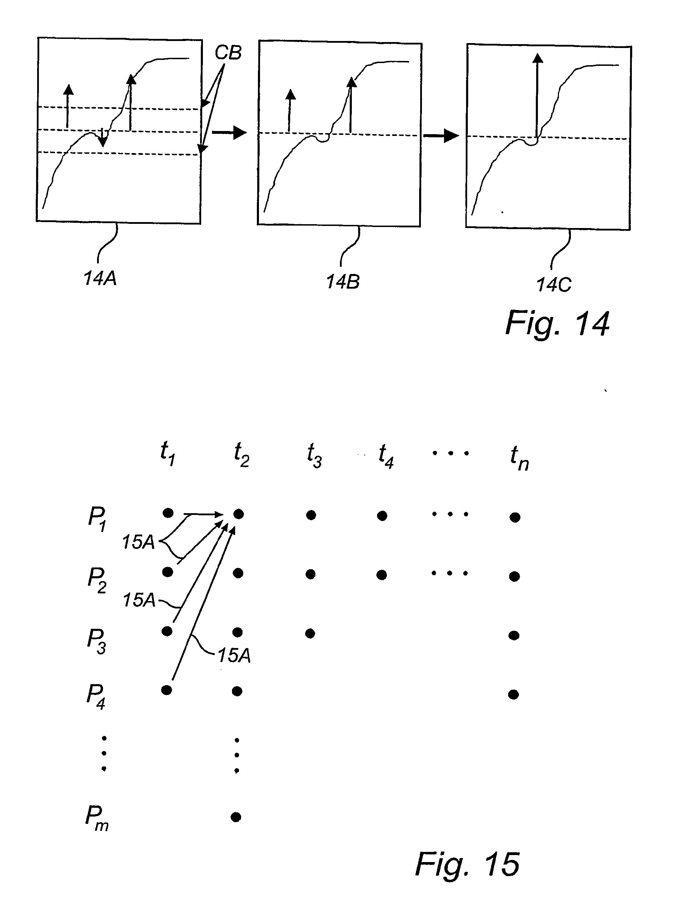

Instead of directly determining the relative displacement from the maximum correlation peak, step 802 may comprise determining a set of displacement candidates with corresponding probability values for each consecutive pair of profiles, and then using error correction and dynamic programming, e.g. Viterbi algorithms, to find the most likely sequence of relative displacements in the sequence of differentiated, low-pass filtered profiles. Fig. 15 illustrates a state matrix used in one embodiment of such a calculation, with different states ($p_1$-$p_m$) being represented in the vertical direction and increasing time ($t_1$-$t_n$) being represented in the horizontal direction. Each time step represents a correlation between a current and a preceding differentiated low-pass filtered profile. Each peak in the resulting correlation curve (right in Fig. 11) represents a candidate transition state ($p_1$-$p_m$). The location (*PeakPos*) and magnitude (*PeakValue*) of each peak is detected and stored as a state value pair in the state matrix. It should be realized that each time step may result in a different number of peaks, i.e. states ($p_1$-$p_m$). While the state matrix is being populated, or after it has been completed, a cumulative score is calculated by evaluating all state transitions from *t-1* to *t*, as illustrated by arrows 15A for the first state at time $t_2$ in Fig. 15. For a transition from a state A to a state B, the cumulative score of state B, *PeakSum$_B$,* is calculated as:

$$PeakSum_B = \frac{PeakSum_A + PeakValue_B}{C_k + abs(PeakPos_A - PeakPos_B)},$$

where $C_k$ is a sensitivity constant which may be set by testing. It is seen that the algorithm favors high peak magnitudes and small position shifts between states A and B. After having evaluated all possible transitions to state B, the greatest *PeakSum$_B$* and the corresponding originating state are stored as state variables of state B. A cumulative score is thus calculated for each state at time $t_2$, and then the same procedure is repeated for the states at time $t_3$, by evaluating the state transitions from $t_2$ to $t_3$. After having traversed the state matrix from $t_1$ to $t_n$, and thus calculated a cumulative score for each of the states at $t_n$, the algorithm then selects the largest cumulative score at $t_n$. The most likely sequence of relative displacements in the sequence of differentiated, low-pass filtered profiles is obtained by tracing the originating states stored in the state matrix backwards from the selected state at $t_n$.

To increase processing efficiency, the algorithm may refrain from calculating *PeakSum$_B$* if the acceleration between states A and B is deemed unrealistic, given by the difference between *PeakPos$_A$* and *PeakPos$_B$*.

As illustrated by the above examples, correlation step 802 results in a series of 1D image profiles and the relative displacements between them. In a subsequent step 803, the original (i.e. non-filtered) 1D image profiles are merged to form a single bar code profile. First, the length of the final resultant profile may be calculated by identifying the longest coherent sequence of displacements that results from the correlation process, and cumulatively summing up these displacements. Then, two buffers are allocated, as illustrated in Fig. 13, one (*Acc*) holding an accumulator element for each pixel over the length of the final resultant profile and the other (*BufCount*) holding the number of image profiles contributing to each accumulator element in the accumulator. Then, for each image profile, the contributions from its pixels $P_1$-$P_n$ are input to the respective elements of the accumulator. Since fractional displacements are used, the contributions will also be fractional. In Fig. 14, the contents of the two buffers (*Acc, BufCount*) are illustrated after processing of a first image profile. When all 1D image profiles have been processed, the resultant pixel values are calculated as: $P_n=Acc_n/BufCount_n$.

In an ensuing step 804, the bar code profile resulting from step 803 is differentiated and the result is processed to yield an edge position-weight representation. The following sub-steps may be used: (sub-step 804A) calculate a differentiated bar code profile, $d_n=p_{n+1}-p_n$ ; and (sub-step 804B) for each continuous sequence m of differentiated values $d_n$ with the same sign, calculate the weight $w_m$ and center of gravity $cg_m$ as:

$$w_m = \sum_x d_x \quad ; \quad cg_m = \frac{\sum_x |xd_x|}{\sum_x |d_x|}, \quad \texttt{respectively.}$$

The resulting edge list ($w_m$,$cg_m$) will have alternating signs on $w_m$, and is sorted so that $cg_m$ is strictly increasing.

Each consecutive pair of edges in the edge list will correspond to a band or bar in the bar code, wherein a positive $w_m$ followed by a negative $w_{m+1}$ represents a band brighter than the surroundings, and a negative $w_m$ followed by a positive $w_{m+1}$ represents a dark bar.

Using the original (non-filtered) 1D image profiles (instead of the low-pass filtered differentiated profiles used in the correlation process) for composing the complete bar code profile ensures that all data available is used, which may be important for proper detection of all edges. However, the complete bar code profile may then also contain components of noise. High-frequency noise may generate "false" bars and bands in the edge list representation of the bar code. Low-frequency noise, which may appear in the images due to non-uniformities in the illumination of the bar code, perspective distortion in the images or non-uniformities in the printing of the bar code, will modulate the overall brightness. A step 805 may be designed to reduce any artifacts resulting from such noise. The step 805 may include eliminating from the edge list all weights $w_m$ that are less than a predetermined overall threshold value. Such an overall threshold value may be difficult to determine, since it will depend on the quality of the bar code print, the illumination, the sheet material, etc. Instead, the weights in the edge list may be examined based upon a set of rules for their mutual relations. One exemplary embodiment is based upon the following sequence of sub-steps: (sub-step 805A) find adjacent pairs of edges (i.e. bars or bands) that fulfill the relationship $|w_i|+|w_{i+1}|<c_{smallpair}$ ($c_{smallpair}$ is a constant which may be determined experimentally) and delete them from the edge list, to thereby eliminate small high-frequency noise bands; (sub-step 805B) find and delete individual edges where $|w_i|<c_{cutoff}$ ($c_{cutoff}$ is a constant which may be determined experimentally, $c_{cutoff}<c_{smallpair}/2$), to thereby remove small edges resulting, i.a., from non-uniform illumination and noise; the first and last edges require special treatment (sub-step 805C), so they are checked against $c_{border\_cutoff}$ (denoted by CB in Fig. 14) and may be deleted accordingly; and (sub-step 805D) merge adjacent edges with the same sign, in the edge list resulting from sub-steps 805A-805C, by calculating a new weight and a new center of gravity as:

$$w_i = w_i + w_{i+1} \quad ; \quad cg_i = \frac{cg_i|w_i| + cg_{i+1}|w_{i+1}|}{|w_i + w_{i+1}|} \, .$$

Fig. 14 illustrates an exemplary subset of a 1D image profile during different stages of processing (14A-14C). To visualize the effects of the processing, edges included in a current edge list are superimposed on the image profile. In going from 14A to 14B, sub-step 805B eliminates a small fictitious negative edge, and in going from 14B to 14C, sub-step 805D merges the remaining adjacent edges to form a new edge.

When a correct bar code edge list has been established, the resulting bar code can be decoded using standard reference algorithms (step 806), for example as published by EAN International, Uniform Code Council Inc (UCC) and AIM Inc. The above-described algorithm has been successfully tested for identifying and decoding of bar codes belonging to the following symbologies: EAN 8, EAN 13, Code 2/5 Interleaved, Codabar, and Code 39, but the above-described algorithms are not limited to these symbologies.

Following step 806, it may be desirable for the control device to issue a confirmation signal to the user to indicate whether the bar code has been properly decoded or not. Such a confirmation signal may be issued by activation of the user unit's MMI (136 in Fig. 1C).

An alternative technique for identifying and decoding a bar code is disclosed in international patent publication WO 01/93183. It is conceivable to supplement or replace one or more of the steps of the method described above with respect to Figs 8-14 with one or more of the steps disclosed in WO 01/93183. For example, a technique for locating a direction perpendicular to the bars in any image, as described in WO 01/93183, could be used to ascertain that the image strip (cf. Fig. 9) extends essentially perpendicularly to the bars in each image.

Irrespective of the technique used to read off the bar code, it may be desirable to indicate to the user unit's control device that a bar code is to be recorded. Such an indication may set the user unit in a bar code reading mode, in which the control device executes dedicated algorithms for detection and, optionally, decoding of bar codes based upon recorded images. The indication may result from a button on the user unit being pushed, or a voice command being recorded by a microphone on the user unit.

In another embodiment, the indication results from the control device detecting a dedicated pattern in an image recorded by the camera system. For example, such a dedicated pattern may be a subset of the position-coding pattern that represents one or more dedicated positions. Since the user unit normally is operated to convert recorded images into positions, it will be capable of recording, during normal operation, a position which causes its control device to switch to the bar code reading mode. In one implementation, the user unit may be configured to enter and stay in the bar code reading mode until the end of the next pen stroke. This implementation allows the dedicated pattern to be separate from the bar code. In yet another implementation, the user unit may be configured to enter and stay on the bar code reading mode for a predetermined period of time.

The maximum swipe speed of the user unit when reading a bar code is directly proportional to the frame rate of the camera system. In the above method, consecutive images should preferably overlap by at least 1/4, and most preferably by at least 1/2, in order for the correlation and merging steps (cf. steps 802-803 in Fig. 8) to yield sufficiently stable results. In one particular embodiment, a frame rate of 100 Hz was found to support maximum swipe speeds of about 0.15 m/s. If higher swipe speeds are desired, for example 0.5 m/s or 0.75 m/s, correspondingly higher frame rates may be required. However, power consumption raises with frame rate, and high power consumption may be unwanted in a handheld device. The position decoding process, on the other hand, need not be dependent on frame rate, if the position-coding pattern supports determination of a position based upon the data within each individual image. Therefore, the frame rate for position determination may be set at 70-100 Hz, which is known to yield acceptable spatial resolution of digitized pen strokes at normal handwriting speeds. To allow for high bar code swiping speeds, while still keeping power consumption down, the control device of the user unit may be configured to selectively increase the frame rate of the camera system in the bar code reading mode only, for example to a frame rate of 100-500 Hz.

In a further embodiment, the control device of the user unit is configured to indicate to the user, by activating the user unit's MMI, whenever the swipe speed is unsuitably high. Thereby, the user can be controlled not to use excessive swipe speeds. The swipe speed could, for example, be represented to the control device by the relative displacement resulting from the correlation step (cf. step 802 in Fig. 8).

The scope of protection applied for is not restricted to the embodiments described above. The invention can be varied within the scope of the appended claims.

In the foregoing Description of Embodiments, various features of the invention are grouped together in a single embodiment for purposes of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Description of the Embodiments, with each claim standing on its own as a separate embodiment of the invention.

## Claims

1. Method for operating a pen device, comprising:

   capturing images of a surface using an optical detector in the pen device; and
   selectively activating a position detection process and a bar code detection process to operate on at least a subset of said images, the position detection process resulting in position data and the bar code detection process resulting in bar code data, **characterized in that** the bar code detection process is activated upon detection of a predetermined pattern in at least one of said images, **in that** said at least one image is part of a sequence of images taken during a period of proximity between the pen device and the surface and **in that** the bar code detection process is terminated upon completion of a sequence of images resulting from a subsequent period of proximity between the pen device and the surface.

2. The method of claim 1, wherein the position detection process operates the optical detector at a first image capture rate, and the bar code detection process operates the optical detector at a second image capture rate which exceeds the first image capture rate.

3. The method of claim 1 or 2, further comprising:

   associating said bar code data with position data resulting from a preceding and/or subsequent activation of the position detection process.

4. The method of any one of claims 1-3, wherein the bar code data results from sequences of positions decoded from said subset of images.

5. The method of any one of claim 1-4, wherein said bar code detection process comprises: inputting a sequence of images of at least portions of the bar code during moving of the optical detector across the same; identifying relative displacements between pairs of said images; and reconstructing the bar code using the images and the relative displacements.

6. The method of claim 5, wherein said identifying comprises: determining, for each image, a one-dimensional luminance profile representing the portion of the bar code in the image; differentiating the resulting one-dimensional luminance profiles; low-pass filtering the resulting differentiated profiles; and correlating the resulting low-pass filtered profiles in pairs to identify said relative displacements.

7. The method of claim 5 or 6, wherein the identifying comprises: correlating one pair of images to determine a correlation-displacement function; operating on said correlation-displacement function with a window function; and determining the relative displacement from the resulting windowed correlation-displacement function.

8. The method of claim 7, wherein, following determination of the relative displacement for said one pair of images, the window function is centered around this relative displacement when operating on a correlation-displacement function determined for a subsequent pair of images.

9. The method of claim 7 or 8, wherein the window function, at least when operating on the correlation-displacement function determined for an initial pair of images, is centered on zero relative displacement.

10. The method of claim 5 or 6, wherein the identifying comprises: determining a plurality of sets of displacement candidates, each set comprising a number of candidate displacement values and corresponding candidate probability values for a respective pair of consecutive images; and calculating a maximum-likelihood transition trajectory through the plurality of sets of displacement candidates, wherein the trajectory identifies said relative displacements.

11. The method of claim 10, wherein the calculating comprises evaluating transitions between said sets in consecutive pairs, stepwise in time, by: calculating transition probabilities from candidates of a first set to candidates of a second set as a function of the candidate displacement values and the candidate probability values; identifying a selected transition probability value and a corresponding selected transition for each candidate of the second set; and using the selected transition probability values in evaluating transitions from the second set to a consecutive set; wherein the trajectory is given by tracing the selected transitions backwards from the selected transition probability that results from evaluating the transition to the last set of displacement candidates.

12. The method of any one of claims 5-11, wherein the reconstructing comprises: determining, for each image, a one-dimensional luminance profile representing the portion of the bar code in the image; and merging the one-dimensional luminance profiles using the relative displacements, to form a bar code profile.

13. The method of claim 12, wherein the bar code profile comprises a sequence of luminance elements, and wherein said merging comprises aligning the one-dimensional profiles with said luminance elements according to their relative displacements, and averaging, for each element, the values of the luminance profiles at the location of the element.

14. The method of claim 12 or 13, further comprising:

    differentiating the bar code profile; and deriving a sequence of edges by calculating the center of gravity of each continuous sequence of differentiated values with the same sign.

15. The method of claim 14, further comprising:

    deriving a sequence of edge intensities by calculating the weight of each continuous sequence of differentiated values with the same sign; and applying a set of rules to amend the sequence of edges based on the sequence of edge intensities.

16. The method of claim 15, wherein the set of rules comprises: eliminating adjacent edges with a combined absolute weight which is less than a predetermined threshold value.

17. The method of claim 15 or 16, wherein the set of rules comprises: replacing adjacent edges with the same sign in the sequence of edges by the center of gravity of the combined differentiated values for these adjacent edges.

18. The method of any one of claims 14-17, further comprising: decoding the bar code based upon the sequence of edges.

19. A computer-readable medium having computer-executable instructions which when executed perform the method of any one of claims 1-18.

20. A pen device, which is configured to capture images of a surface using a built-in optical detector and to selectively activate a position detection process and a bar code detection process to operate on at least a subset of the images, the position detection process resulting in position data and the bar code detection process resulting in bar code data, **characterized in that** the pen device is configured to activate the bar code detection process upon detection of a predetermined pattern in at least one of said images, wherein said at least one image is part of a sequence of images taken during a period of proximity between the pen device and the surface, and **in that** the pen device is configured to terminate the bar code detection process upon completion of a sequence of images resulting from a subsequent period of proximity between the pen device and the surface.

21. The pen device of claim 20, wherein the position detection process operates the optical detector at a first image capture rate, and the bar code detection process operates the optical detector at a second image capture rate which exceeds the first image capture rate.

**22.** The pen device of claim 20 or 21, wherein the pen device is further configured to associate said bar code data with position data resulting from a preceding and/or subsequent activation of the position detection process.

**23.** The pen device of any one of claims 20-22, wherein the bar code data results from sequences of positions decoded from said subset of images.


**Patentansprüche**

**1.** Verfahren zum Betrieb einer Pen-Einrichtung, mit den folgenden Schritten:

Erfassen von Bildern einer Oberfläche unter Verwendung eines optischen Detektors in der Pen-Einrichtung; und selektives Aktivieren eines Positionsdetektionsprozesses und eines Strichcodedetektionsprozesses, um an mindestens einer Teilmenge der Bilder zu operieren, wobei der Positionsdetektionsprozess zu Positionsdaten und der Strichcodedetektionsprozess zu Strichcodedaten führt, **dadurch gekennzeichnet, dass** der Strichcodedetektionsprozess bei Detektion eines vorbestimmten Musters in mindestens einem der Bilder aktiviert wird, dass das mindestens eine Bild Teil einer während einer Periode der Proximität zwischen der Pen-Einrichtung und der Oberfläche genommenen Sequenz von Bildern ist und dass der Strichcodedetektionsprozess beim Abschluss einer sich aus einer nachfolgenden Periode der Proximität zwischen der Pen-Einrichtung und der Oberfläche ergebenden Sequenz von Bildern beendet wird.

**2.** Verfahren nach Anspruch 1, wobei der Positionsdetektionsprozess den optischen Detektor mit einer ersten Bilderfassungsrate betreibt und der Strichcodedetektionsprozess den optischen Detektor mit einer zweiten Bilderfassungsrate betreibt, die die erste Bilderfassungsrate übersteigt.

**3.** Verfahren nach Anspruch 1 oder 2, ferner mit dem folgenden Schritt:

Assoziieren der Strichcodedaten mit Positionsdaten, die sich aus einer vorherigen und/oder nachfolgenden Aktivierung des Positionsdetektionsprozesses ergeben.

**4.** Verfahren nach einem der Ansprüche 1-3, wobei sich die Strichcodedaten aus Sequenzen von Positionen ergeben, die aus der Teilmenge von Bildern decodiert werden.

**5.** Verfahren nach einem der Ansprüche 1-4, wobei der Strichcodedetektionsprozess Folgendes umfasst:

Eingeben einer Sequenz von Bildern mindestens von Teilen des Strichcodes während des Bewegens des optischen Detektors über diesen; Identifizieren von relativen Verschiebungen zwischen Paaren der Bilder; und Rekonstruieren des Strichcodes unter Verwendung der Bilder und der relativen Verschiebungen.

**6.** Verfahren nach Anspruch 5, wobei das Identifizieren Folgendes umfasst: Bestimmen eines eindimensionalen Luminanzprofils, das den Teil des Strichcodes in dem Bild repräsentiert, für jedes Bild; Differenzieren der resultierenden eindimensionalen Luminanzprofile; Tiefpassfilter der resultierenden differenzierten Profile; und Korrelieren der resultierten tiefpassgefilterten Profile in Paaren, um die relativen Verschiebungen zu identifizieren.

**7.** Verfahren nach Anspruch 5 oder 6, wobei das Identifizieren Folgendes umfasst: Korrelieren eines Paars von Bildern um eine Korrelationsverschiebungsfunktion zu bestimmen; Operieren an der Korrelationsverschiebungsfunktion mit einer Fensterfunktion; und Bestimmen der relativen Verschiebung aus der resultierenden gefensterten Korrelationsverschiebungsfunktion.

**8.** Verfahren nach Anspruch 7, wobei nach der Bestimmung der relativen Verschiebung für das eine Paar von Bildern die Fensterfunktion um diese relative Verschiebung herum zentriert wird, wenn an einer Korrelationsverschiebungsfunktion operiert wird, die für ein nachfolgendes Paar von Bildern bestimmt wird.

**9.** Verfahren nach Anspruch 7 oder 8, wobei die Fensterfunktion mindestens beim Operieren an der für ein anfängliches Paar von Bildern bestimmten Korrelationsverschiebungsfunktion auf einer relativen Verschiebung von null zentriert ist.

**10.** Verfahren nach Anspruch 5 oder 6, wobei das Identifizieren Folgendes umfasst: Bestimmen mehrerer Mengen von Verschiebungskandidaten, wobei jede Menge einer Anzahl von Kandidaten-Verschiebungswerten und entsprechende Kandidaten-Wahrscheinlichkeitswerte für ein jeweiliges Paar aufeinander folgender Bilder umfasst; und Berechnen der Maximum-Likelihood-Übergangstrajektorie durch die mehreren Mengen von Verschiebungskandidaten hindurch, wobei die Trajektorie die relativen Verschiebungen identifiziert.

11. Verfahren nach Anspruch 10, wobei das Berechnen das zeitlich schrittweise Auswerten von Übergängen zwischen den Mengen in aufeinander folgenden Paaren umfasst, durch: Berechnen von Übergangswahrscheinlichkeiten von Kandidaten einer ersten Menge zu Kandidaten einer zweiten Menge als Funktion der Kandidaten-Verschiebungswerte und der Kandidaten-Wahrscheinlichkeitswerte; Identifizieren eines gewählten Übergangswahrscheinlichkeitswerts und eines entsprechenden gewählten Übergangs für jeden Kandidaten der zweiten Menge; und Verwenden der gewählten Übergangswahrscheinlichkeitswerte bei der Auswertung von Übergängen von der zweiten Menge zu einer nachfolgenden Menge; wobei die Trajektorie durch Rückwärtsverfolgung der gewählten Übergänge von der gewählten Übergangswahrscheinlichkeit, die sich aus der Auswertung des Übergangs zu der letzten Menge von Verschiebungskandidaten ergibt, gegeben wird.

12. Verfahren nach einem der Ansprüche 5-11, wobei das Rekonstruieren Folgendes umfasst: Bestimmen eines eindimensionalen Luminanzprofils, das den Teil des Strichcodes in dem Bild repräsentiert, für jedes Bild; und Zusammenführen der eindimensionalen Luminanzprofile unter Verwendung der relativen Verschiebungen, um ein Strichcodeprofil zu bilden.

13. Verfahren nach Anspruch 12, wobei das Strichcodeprofil eine Sequenz von Luminanzelementen umfasst und wobei das Zusammenführen das Ausrichten der eindimensionalen Profile mit den Luminanzelementen gemäß ihren relativen Verschiebungen und Mitteln der Werte der Luminanzprofile an dem Ort des Elements für jedes Element umfasst.

14. Verfahren nach Anspruch 12 oder 13, ferner mit den folgenden Schritten: Differenzieren des Strichcodeprofils; und Ableiten einer Sequenz von Rändern durch Berechnen des Schwerpunkts jeder kontinuierlichen Sequenz der differenzierten Werte mit demselben Vorzeichen.

15. Verfahren nach Anspruch 14, ferner mit den folgenden Schritten: Ableiten einer Sequenz von Randintensitäten durch Berechnen des Gewichts jeder kontinuierlichen Sequenz differenzierter Werte mit demselben Vorzeichen; und Anwenden einer Menge von Regeln, um die Sequenz von Rändern auf der Basis der Sequenz von Randintensitäten abzuändern.

16. Verfahren nach Anspruch 15, wobei die Menge von Regeln Folgendes umfasst: Eliminieren von angrenzenden Rändern mit einem kombinierten Absolutgewicht, das kleiner als ein vorbestimmter Schwellenwert ist.

17. Verfahren nach Anspruch 15 oder 16, wobei die Menge von Regeln Folgendes umfasst: Ersetzen angrenzender Ränder mit demselben Vorzeichen in der Sequenz von Rändern durch den Schwerpunkt der kombinierten differenzierten Werte für diese angrenzenden Ränder.

18. Verfahren nach einem der Ansprüche 14-17, ferner mit dem folgenden Schritt: Decodieren des Strichcodes auf der Basis der Sequenz von Rändern.

19. Computerlesbares Medium mit computerausführbaren Anweisungen, die, wenn sie ausgeführt werden, ein Verfahren nach einem der Ansprüche 1-18 ausführen.

20. Pen-Einrichtung, die dafür ausgelegt ist, Bilder einer Oberfläche unter Verwendung eines eingebauten optischen Detektors zu erfassen und selektiv einen Positionsdetektionsprozess und einen Strichcodedetektionsprozess zu aktivieren, um an mindestens einer Teilmenge der Bilder zu operieren, wobei der Positionsdetektionsprozess zu Positionsdaten und der Strichcodedetektionsprozess zu Strichcodedaten führt, **dadurch gekennzeichnet, dass** die Pen-Einrichtung dafür ausgelegt ist, den Strichcodedetektionsprozess bei Detektion eines vorbestimmten Musters in mindestens einem der Bilder zu aktivieren, wobei das mindestens eine Bild Teil einer während einer Periode der Proximität zwischen der Pen-Einrichtung und der Oberfläche genommenen Sequenz von Bildern ist, und dass die Pen-Einrichtung dafür ausgelegt ist, den Strichcodedetektionsprozess beim Abschluss einer sich aus einer nachfolgenden Periode der Proximität zwischen der Pen-Einrichtung und der Oberfläche ergebenden Sequenz von Bildern zu beenden.

21. Pen-Einrichtung nach Anspruch 20, wobei der Positionsdetektionsprozess den optischen Detektor mit einer ersten Bilderfassungsrate betreibt und der Strichcodedetektionsprozess den optischen Detektor mit einer zweiten Bilderfassungsrate betreibt, die die erste Bilderfassungsrate übersteigt.

22. Pen-Einrichtung nach Anspruch 20 oder 21, wobei die Pen-Einrichtung ferner dafür ausgelegt ist, die Strichcodedaten mit Positionsdaten zu assoziieren, die sich aus einer vorherigen und/oder nachfolgenden Aktivierung des Positionsdetektionsprozesses ergeben.

23. Pen-Einrichtung nach einem der Ansprüche 20-22, wobei sich die Strichcodedaten aus Sequenzen von Positionen ergeben, die aus der Teilmenge von Bildern decodiert werden.

**Revendications**

1. Procédé d'exploitation d'un dispositif de type stylo, comportant les étapes consistant à :

   capturer des images d'une surface à l'aide d'un détecteur optique compris dans le dispositif de type stylo ; et activer sélectivement un processus de détection de position et un processus de détection de code à barres en vue d'agir sur au moins un sous-ensemble desdites images, le processus de détection de position engendrant des données de position et le processus de détection de code à barres engendrant des données de code à barres, **caractérisé en ce que** le processus de détection de code à barres est activé suite à la détection d'un motif prédéterminé dans au moins une desdites images, **en ce que** ladite ou lesdites images fait partie d'une suite d'images prises au cours d'une période de proximité entre le dispositif de type stylo et la surface, et **en ce que** l'on met fin au processus de détection de code à barres une fois complétée une suite d'images résultant d'une période ultérieure de proximité entre le dispositif de type stylo et la surface.

2. Procédé selon la revendication 1, le processus de détection de position faisant fonctionner le détecteur optique à une première cadence de capture d'images et le processus de détection de code à barres faisant fonctionner le détecteur optique à une deuxième cadence de capture d'images supérieure à la première cadence de capture d'images.

3. Procédé selon la revendication 1 ou 2, comportant en outre l'étape consistant à : associer lesdites données de code à barres à des données de position résultant d'une activation antérieure et / ou ultérieure du processus de détection de position.

4. Procédé selon l'une quelconque des revendications 1 à 3, les données de code à barres résultant de suites de positions décodées à partir dudit sous-ensemble d'images.

5. Procédé selon l'une quelconque des revendications 1 à 4, ledit processus de détection de code à barres comportant les étapes consistant à :

   introduire une suite d'images d'au moins des parties du code à barres pendant que le détecteur optique parcourt celui-ci ; identifier des décalages relatifs entre des paires desdites images ; et reconstituer le code à barres à l'aide des images et des décalages relatifs.

6. Procédé selon la revendication 5, ladite identification comportant les étapes consistant à :

   déterminer, pour chaque image, un profil unidimensionnel de luminance représentant la partie du code à barres présente sur l'image ; différentier les profils unidimensionnels de luminance résultants ; appliquer un filtre passe-bas aux profils différentiés résultants ; et corréler par paires les profils résultant du filtrage passe-bas afin d'identifier lesdits décalages relatifs.

7. Procédé selon la revendication 5 ou 6, l'identification comportant les étapes consistant à :

   corréler une paire d'images afin de déterminer une fonction de décalage de corrélation ; faire agir une fonction de fenêtre sur ladite fonction de décalage de corrélation ; et déterminer le décalage relatif à partir de la fonction de décalage de corrélation résultant du fenêtrage.

8. Procédé selon la revendication 7, la fonction de fenêtre étant, à la suite de la détermination du décalage relatif pour ladite paire d'images considérée, centrée sur le décalage relatif en question lorsqu'elle agit sur une fonction de décalage de corrélation déterminée pour une paire suivante d'images.

9. Procédé selon la revendication 7 ou 8, la fonction de fenêtre étant, au moins lorsqu'elle agit sur la fonction de décalage de corrélation déterminée pour une paire initiale d'images, centrée sur un décalage relatif nul.

10. Procédé selon la revendication 5 ou 6, l'identification comportant les étapes consistant à :

    déterminer une pluralité d'ensembles de décalages candidats, chaque ensemble comportant un certain nombre de valeurs candidates de décalage et de valeurs candidates correspondantes de probabilité pour une paire respective d'images consécutives ; et calculer une trajectoire de transition au maximum de vraisemblance passant par la pluralité d'ensembles de décalages candidats, la trajectoire identifiant lesdits décalages relatifs.

11. Procédé selon la revendication 10, le calcul comportant une étape consistant à évaluer des transitions entre lesdits ensembles par paires consécutives, par pas de temps : en calculant des probabilités de transition de candidats du premier ensemble à des candidats du deuxième ensemble en fonction des valeurs candidates de décalage et des valeurs candidates de probabilité ; en identifiant une valeur choisie de probabilité de transition et une transition choisie correspondante pour chaque candidat du deuxième ensemble ; et en utilisant les valeurs choisies de probabilité de transition lors de l'évaluation des transitions du deuxième ensemble à un ensemble consécutif ; la trajectoire étant donnée en parcourant à rebours les transitions choisies à partir de la probabilité de transition choisie résultant de l'évaluation de la transition vers le dernier ensemble de décalages candidats.

12. Procédé selon l'une quelconque des revendications 5 à 11, la reconstitution comportant les étapes consistant à : déterminer, pour chaque image, un profil unidimensionnel de luminance représentant la partie du code à barres présente sur l'image ; et fusionner les profils unidimensionnels de luminance à l'aide des décalages relatifs pour former un profil de code à barres.

13. Procédé selon la revendication 12, le profil de code à barres comportant une suite d'éléments de luminance et ladite fusion comportant les étapes consistant à aligner les profils unidimensionnels avec lesdits éléments de luminance en fonction de leurs décalages relatifs et à effectuer une moyenne, pour chaque élément, des valeurs des profils de luminance à l'emplacement de l'élément.

14. Procédé selon la revendication 12 ou 13, comportant en outre les étapes consistant à :

    différentier le profil du code à barres ; et établir une suite de bords en calculant le barycentre de chaque suite continue de valeurs différentiées de même signe.

15. Procédé selon la revendication 14, comportant en outre les étapes consistant à : établir une suite d'intensités de bords en calculant le poids de chaque suite continue de valeurs différentiées de même signe ; et appliquer un ensemble de règles pour corriger la suite de bords sur la base de la suite d'intensités de bords.

16. Procédé selon la revendication 15, l'ensemble de règles comportant : l'élimination des bords adjacents dont le poids absolu combiné est inférieur à une valeur seuil prédéterminée.

17. Procédé selon la revendication 15 ou 16, l'ensemble de règles comportant : le remplacement des bords adjacents de même signe dans la suite de bords par le barycentre des valeurs différentiées combinées des bords adjacents en question.

18. Procédé selon l'une quelconque des revendications 14 à 17, comportant en outre une étape consistant à : décoder le code à barres sur la base de la suite de bords.

19. Support lisible par ordinateur comportant des instructions exécutables par ordinateur qui, lorsqu'elles sont exécutées, réalisent le procédé selon l'une quelconque des revendications 1 à 18.

20. Dispositif de type stylo configuré de façon à capturer des images d'une surface à l'aide d'un détecteur optique incorporé et d'activer sélectivement un processus de détection de position et un processus de détection de code à barres en vue d'agir sur au moins un sous-ensemble desdites images, le processus de détection de position engendrant des données de position et le processus de détection de code à barres engendrant des données de code à barres, **caractérisé en ce que** le dispositif de type stylo est configuré de façon à activer le processus de détection de code à barres suite à la détection d'un motif prédéterminé dans au moins une desdites images, ladite ou lesdites images faisant partie d'une suite d'images prises au cours d'une période de proximité entre le dispositif de type stylo et la surface, et **en ce que** le dispositif de type stylo est configuré de façon à mettre fin au processus de détection de code à barres une fois complétée une suite d'images résultant d'une période ultérieure de proximité entre le dispositif de type stylo et la surface.

21. Dispositif de type stylo selon la revendication 20, le processus de détection de position faisant fonctionner le détecteur optique à une première cadence de capture d'images et le processus de détection de code à barres faisant fonctionner le détecteur optique à une deuxième cadence de capture d'images supérieure à la première cadence de capture d'images.

22. Dispositif de type stylo selon la revendication 20 ou 21, le dispositif de type stylo étant en outre configuré de façon à associer lesdites données de code à barres à des données de position résultant d'une activation antérieure et / ou ultérieure du processus de détection de position.

23. Dispositif de type stylo selon l'une quelconque des revendications 20 à 22, les données de code à barres résultant de suites de positions décodées à partir dudit sous-ensemble d'images.

*Fig. 1A*

*Fig. 1B*

*Fig. 1C*

Fig. 2

Fig. 3

Fig. 4

```
      ┌─────────────────────┐
      │  Printout of form   │ ─── 500
      └─────────────────────┘
                 │
                 ▼
      ┌─────────────────────┐
      │       Print         │ ─── 501
      │    form layout      │
      └─────────────────────┘
                 │
                 ▼
      ┌─────────────────────┐
      │       Print         │ ─── 502
      │ identifying pattern │
      └─────────────────────┘
                 │
                 ▼
      ┌─────────────────────┐
      │     Generate        │ ─── 503
      │  database form      │
      └─────────────────────┘
```

*Fig. 5*

Record form data — 600

Record first set of position informtion — 601

Record second set of position informtion — 602

Fig. 6

Fig. 7

Fig. 8

Fig. 9

Fig. 10

*Fig. 11*

*Fig. 12*

*Fig. 13*

*Fig. 14*

*Fig. 15*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030061188 A
- US 20030046256 A
- US 20020081711 A
- US 20020050982 A
- US 6570104 B
- US 6663008 B
- US 6667695 B
- US 6674427 B
- WO 0116691 A
- US 6330976 B

- US 20040085287 A
- US 5852434 A
- US 20030053699 A
- US 20030189664 A
- US 20030118233 A
- US 20020044138 A
- US 6732927 B
- US 20030122855 A
- US 20030128194 A
- WO 0193183 A